# EUROPEAN PATENT SPECIFICATION

(11) **EP 2 871 299 B1**
(45) Date of publication and mention of the grant of the patent: **16.11.2016**
(21) Application number: 13192208.0
(22) Date of filing: 08.11.2013
(51) Int. Cl.: E04D 3/35, H02S 20/23, F24J 2/46, F24J 2/51, F24J 2/52, H02S 40/34

(54) **A composite insulating panel**
Verbundisolierplatte
Panneau isolant composite

(43) Date of publication of application: 13.05.2015
(73) Proprietor: Kingspan Holdings (IRL) Limited, Kingscourt, County Cavan (IE)
(72) Inventor: Flynn, Gregory, Collon, Co. Louth (IE); Mc Donald, Gareth, Belturbet, Co. Cavan (IE); Martin, Thomas, Carrickmacross, Co. Monaghan (IE)
(74) Representative: Tomkins & Co

(56) References cited:
- EP-A1- 2 053 177
- EP-A2- 1 548 202
- GB-A- 2 488 902
- US-A- 3 397 496
- US-A1- 2011 041 888
- US-B1- 6 408 594

## Description

### Technical Field

The present invention is directed to a composite insulating panel, and in particular a composite insulating panel suitable for an integrated solar cell.

### Background Art

With increasing energy costs there is a need for a more thermally efficient system for cladding a building. Various attempts have been made to provide composite insulation panels with photovoltaic material applied. For example, US 2002112419 A (DORR KARL-WERNER, FINGER ULLRICH) describes planar photovoltaic elements, which are bonded using a cold bonding adhesive to a cover plate of a panel. Another composite insulating panel is known from GB 2488902 A (CAROLAN JAMES, FLYNN GREGORY). However, the bonding of the materials to the external surface has significant drawbacks in terms of fitting and installing the panelling with the planar photovoltaic elements. US 2011041888 A (LEVINE BART) describes an insulating construction panel with integrated photovoltaic modules according to the preamble of claim 1. However such integrated panels have many structural instabilities.

This invention is directed towards providing an improved insulating panel system with an integrated photovoltaic solar collector that mitigates many of the problems with the systems described above.

### Summary of invention

According to a first aspect of the invention there is provided a composite insulating panel according to claim 1.

The first or second reinforcing means may comprise a first part for attaching to the first sheet and a second part for extending at least partially into the body of insulating material.

The first or second reinforcing means may comprise a substantially Z shaped member.

The first or second reinforcing means may comprise a substantially U shaped member.

The first or second reinforcing means may comprise a substantially L shaped member.

The first or second reinforcing means comprises a substantially T shaped member.

The use of the first and second reinforcing means overcomes the structural instabilities introduced due to the cut-away opening.

The first or second reinforcing means may be manufactured from galvanised steel.

The composite insulating panel may further comprise a gasket mounted along the perimeter of the cut-away opening.

The gasket provides a weather tight seal and further allows for differences in thermal expansion between the module and also the panel.

The first sheet may comprise a substantially flat portion and wherein the cut-away opening is located in the substantially flat portion.

This maximises the surface area for light absorption.

The first sheet may comprise a plurality of spaced-apart cut-away openings, each suitable for having a photovoltaic solar collector module mounted therein.

The openings may be longitudinally spaced-apart along the panel.

The openings may be transversely spaced-apart across the panel.

The first sheet may have a first longitudinally extending raised projection at one side of the panel and a second longitudinally extending raised projection at an opposite side of the panel.

The first sheet may have a first longitudinally extending recessed indentation at one side of the panel and a second longitudinally extending recessed indentation at an opposite side of the panel, wherein the first and second recessed indentations are located between the first and second longitudinally extending raised projections.

The recessed indentations provide additional structural stability for panel.

The first reinforcing means may be attached to the first longitudinally extending recessed indentation and the second reinforcing means is attached to the second longitudinally extending recessed indentation.

In combination, the reinforcing means and the recessed indentations provide a structurally more stable panel with a cut-away opening therein.

The first raised projection may comprise a side underlap projection and the second raised projection may comprise a side overlap projection for jointing adjacent panels.

The first sheet may comprise a male projecting part and a female recess part for jointing adjacent panels.

The second sheet may comprise a male projecting part and a female recess part for jointing adjacent panels.

The first sheet may comprise an endlap for jointing adjacent panels

At least a portion of the endlap may be arranged at an angle with respect to the first sheet.

When a cut-away opening is provided in the external top sheet, this may cause the endlap to deform or buckle such that the joint with an adjacent panel is no longer flush. This will lead to a degradation of the assembled panels. The provision of an angled section of the endlap or angled endlap allows a flush joint to be maintained. The angled section may be a fold in the endlap.

The insulating body may comprise a foam.

The foam may comprise a polyisocyanurate foam material.

The foam may comprise a phenolic foam material.

The first sheet is made of a metallic material.

The first sheet may comprise a steel material.

The second sheet may further comprise an opening therein for receiving a connector housing.

The panel described above may further comprise a protective surround positioned between the inner face of the first sheet and the inner face of the second sheet and arranged to provide a cavity in the body of insulating material to accommodate a junction box of a solar collector module mounted in the cut-away opening in the first sheet.

The panel may comprise a roof panel.

A further embodiment of the present invention includes a panel system comprising a composite insulating panel as described above and a photovoltaic solar collector module mounted in the cut-away opening therein having an inner face and an outer face and wherein the body of insulating material extends between inner face of the second sheet, the inner face of the first sheet and the inner face of the photovoltaic solar collector module.

The outer face of the solar collector module may be substantially co-planar with the outer face of the flat portion of the first sheet.

The panel system may further comprise terminals for connecting to an inverter.

The terminals may be provided in a housing that extends through the second sheet of the composite panel.

A further embodiment of the present invention includes a roof assembly comprising a plurality of panel systems as described above.

The photovoltaic modules may be electrically interconnected.

A further embodiment of the present invention includes a method for manufacturing a panel system comprising the steps of:-
providing a first metallic sheet;
cutting a hole in the first sheet to accommodate a photovoltaic solar collector module;
attaching a first reinforcing means to an inner face of the first sheet at a first side of the panel and a second reinforcing means attached to the
inner face of the first sheet at the opposite side of the panel;
inserting the solar collector module into the cut-out hole;
sealing the solar collector module to the first sheet;
providing a second metallic sheet, the second sheet having an opening therein to receive a connector housing;
leading electrical connections from the solar collector module through the connector housing; and
providing a body of insulating material between an inner face of the second sheet and the inner face of the first sheet and an inner face of the solar collector module and wherein the first and second reinforcing means extend at least partially into the body of insulating material.

The body of insulation material may be provided by injecting liquid foam reactants between the inner faces of the second sheet, the first sheet and the solar collector module.

The method may further comprise the steps of profiling the side edges of the external sheet to form a first longitudinally extending raised projection at one side of the panel and a second longitudinally extending raised projection at an opposite side of the panel leaving a substantially flat portion extending between the first and second raised projections and mounting the solar collector module in a cut-out opening in the substantially flat portion.

The method may further comprise the steps of profiling the first sheet to form a first longitudinally extending recessed indentation at one side of the panel and a second longitudinally extending recessed indentation at an opposite side of the panel, wherein the first and second recessed indentations are located between the first and second longitudinally extending raised projections.

The first reinforcing means may be attached to the first longitudinally extending recessed indentation and the second reinforcing means may be attached to the second longitudinally extending recessed indentation.

Sealing the solar collector module to the first sheet may comprise mounting a gasket on the perimeter of the cut-out hole for sealably engaging the solar module.

The method may further comprise positioning a protective surround between the inner face of the first sheet and the inner face of the second sheet to provide a cavity in the body of insulating material for accommodating a junction box of the solar collector module.

The method may further comprise positioning a plurality of separators between the inner face of the first sheet and the inner face of the second sheet prior to providing the body of insulating material.

Leading electrical connections from the solar collector module through the connector housing comprises attaching the electrical connections to the inner face of the second sheet.

### Brief description of drawings

The invention will be more clearly understood from the following description of an embodiment thereof, given by way of example only, with reference to the accompanying drawings, in which:

Fig. 1 is an isometric view, from above, of a panel system according to the invention;
Fig. 2 is an isometric view, from below, of the panel system of Fig. 1;
Fig. 3 is an exploded view of the panel system according to the invention;
Fig. 4 is an enlarged cross sectional view of a sealing detail of the panel according to the invention;
Fig. 5a is an enlarged cross sectional view of an alternative sealing detail of the panel according to the invention;
Fig 5b is an enlarged cross sectional view of the alternative sealing detail of Fig. 5a;
Fig. 6 is an enlarged cross sectional view of a connector and housing part of the panel system in accordance with the present invention;
Fig. 7 is an isometric view of another panel system of the invention;
Figs. 8 to 10 illustrate steps in the manufacture of the panel system of the invention;
Fig. 11 is an isometric view, from above of a panel system in accordance with the present invention
Fig. 12 is a cross-sectional view of the insulated panel system of the present invention incorporating a protective surround.

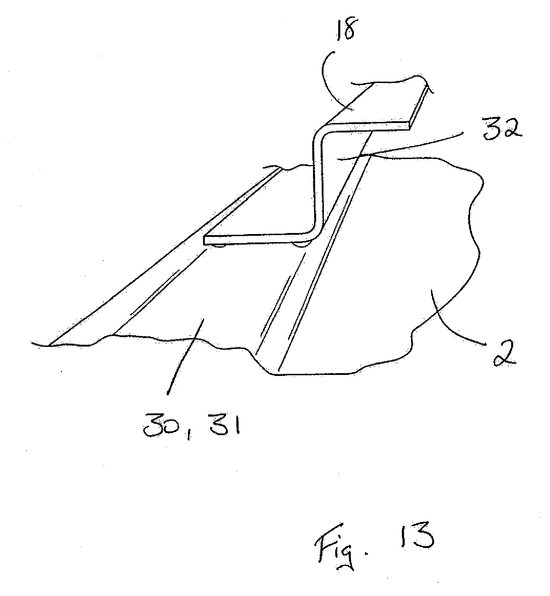

Fig. 13 is a cross sectional view of a panel incorporating reinforcing means in accordance with the invention.

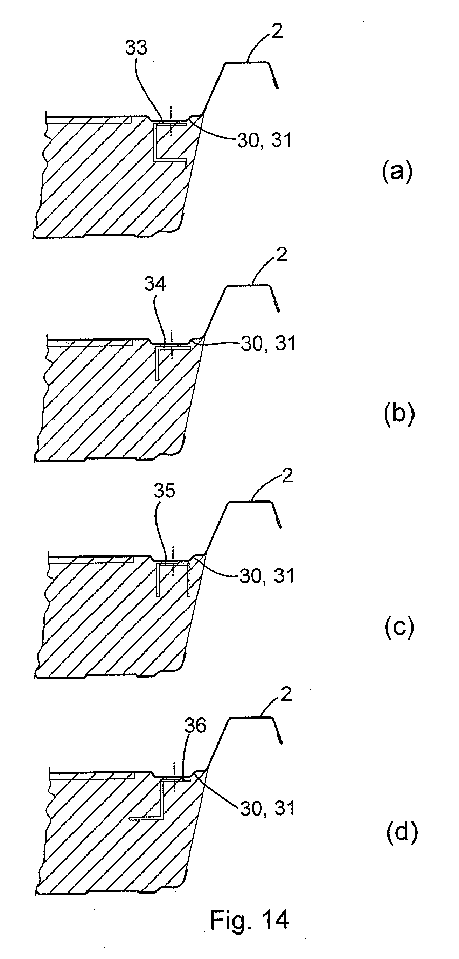

Fig. 14 a to d are cross sectional views of alternative reinforcing means in panels according to the invention
Fig. 15 is an end view of an embodiment of an external sheet of a panel in accordance with the present invention.
Fig. 16. is a partial isometric view of overlapped panels in accordance with the present invention.

### Description of embodiments

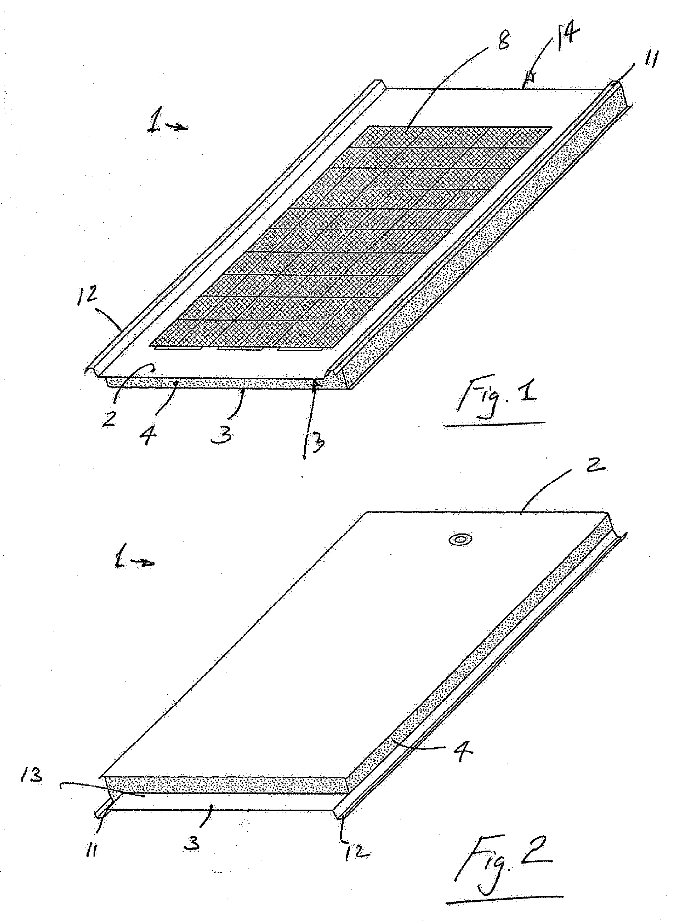

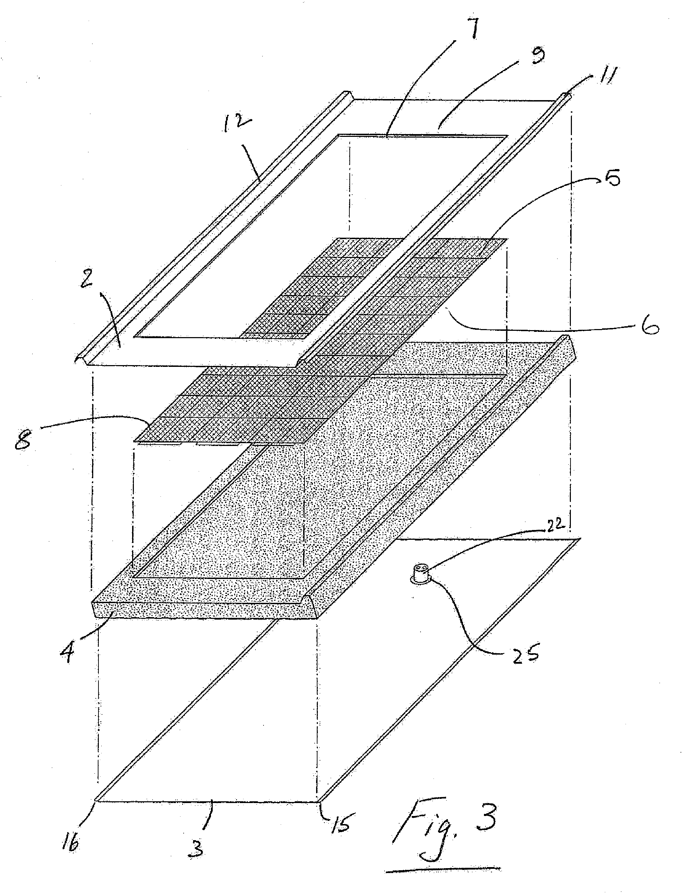

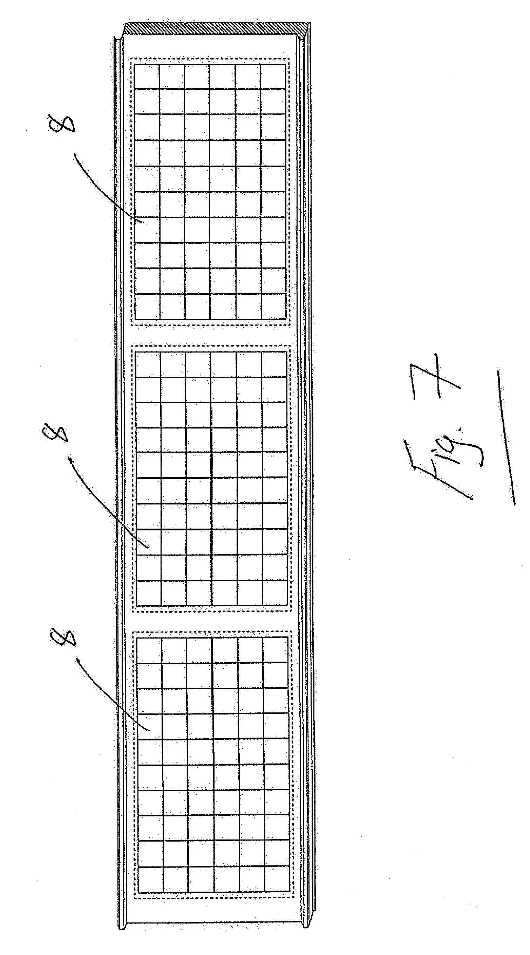

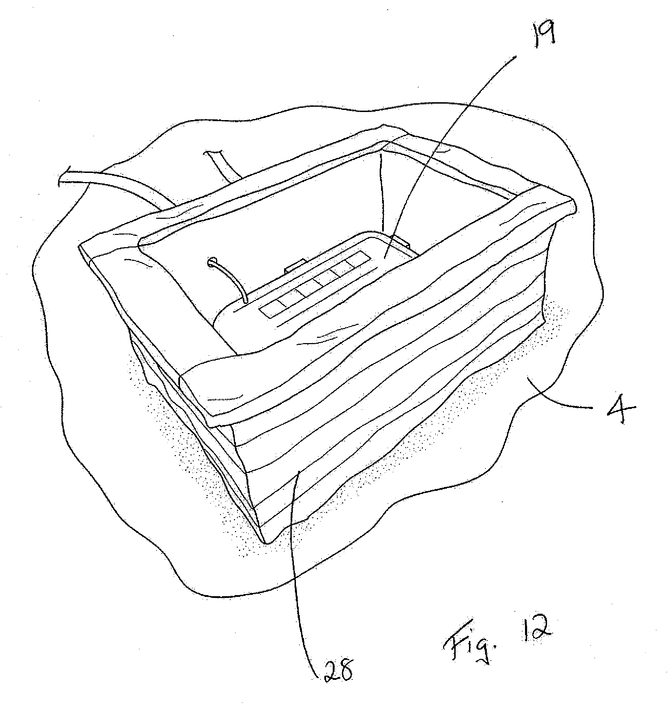

Referring to the drawings there is illustrated an insulating panel 1 according to the invention; wherein in Fig.1-12, the panels comprise reinforcing means which are not shown. Whilst the insulated panel may be provided without an included photovoltaic cell, the illustrations herein show a panel system comprising an integral photovoltaic cell.

The insulating panel in this case comprises a first sheet or external sheet 2, a second sheet or inner sheet 3 with an insulating body, in this case an insulating foam 4 therebetween. The foam may, for example be of polyisocyanurate foam or a phenolic foam. In this case, the panel 1 is a roof panel 1 and the external sheet 2 and the internal sheet 3 are of metal, such as galvanised and/or painted steel.

The external sheet 2 has a cut-away rectilinear opening 7 therein. The rectilinear opening 7 is dimensioned to substantially accommodate a photovoltaic solar collector module 8 within the boundaries of the opening 7. The photovoltaic solar collector module 8, which may be of any suitable type such as amorphous silicon or crystalline silicon material is mountable in the opening 7 in the external sheet 1. The photovoltaic solar collector module has an outer face 5 and an internal face 6. The outer face 5 of the solar collector module 8, when mounted in the opening 7, is preferably substantially co-planar with the outer face of the external sheet 2. This provides a flat surface for run-off of debris/weather.

The body 4 of insulating material extends between the inner face of the internal sheet 3 and the inner faces of the external sheet 2 and the photovoltaic solar collector module 8. By extending between it is meant that the body of insulating material fills the area between the inner face of the external sheet with the PV module mounted in the rectilinear opening therein and the inner face of the internal sheet.

A gap is provided between the module and the adjacent edges of the external sheet 2 when the module is inserted in the rectilinear opening 7. The gap allows for minor movements as a result of thermal expansion/contraction.

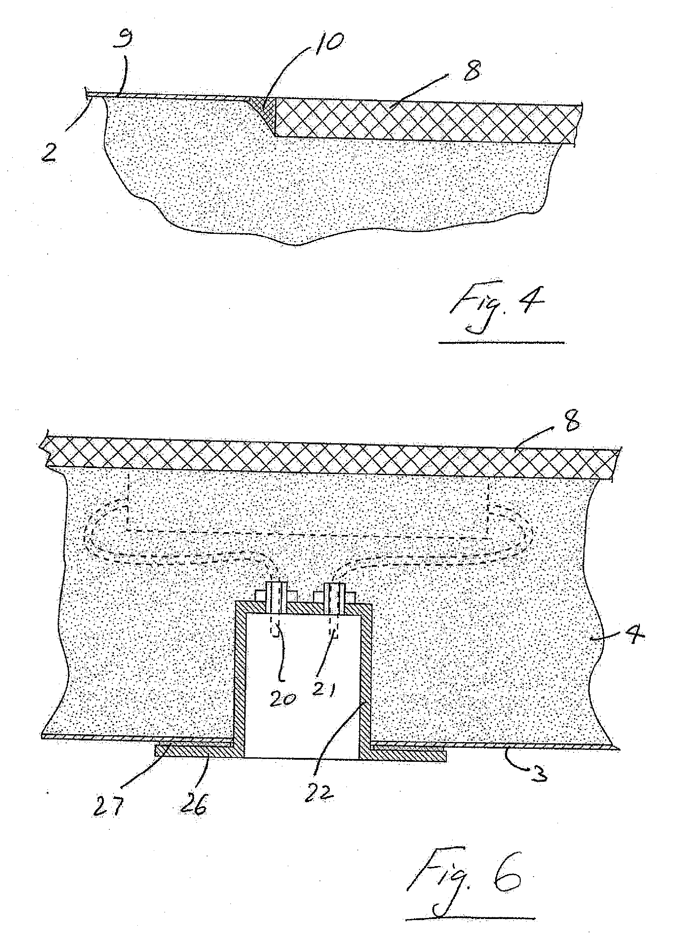

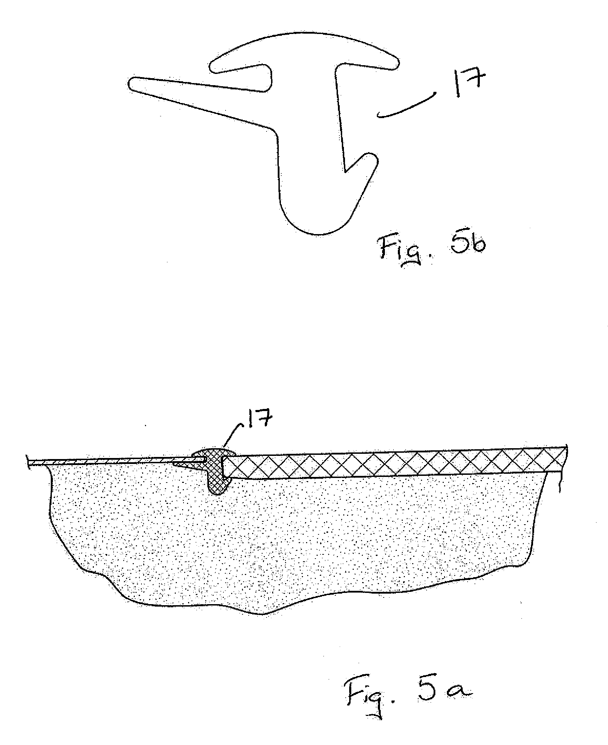

In the configuration of Figure 4 the gap is filled with a suitable flexible seal 10,such as a silicone sealant. In an alternative configuration shown in Figure 5, a gasket 17 is used to provide flexible seal.

A gasket 17 ensures a smooth transition and technical assembly between the module and the aperture in the external sheet.

The gasket further provides weather tightness, thermal durability, ease of assembly and an aesthetic uniformity. Such gaskets are, for example, manufactured from a silicon-type material.

It will be appreciated that the shore hardness of the gasket material allows for flexibility and sufficient compression for the thermal movement. In addition, the geometry of the gasket allows sufficient clearance between the external sheet and the solar panel to accommodate relative movements (expansion/contraction) of both when subjected to the high temperatures generated when solar energy falls on the solar panel. It will be further appreciated that the gasket requires a high temperature resistance capable of withstanding the exposure temperatures in use.

The external sheet 2 has a first longitudinally extending raised projection 11 at one side of the panel and a second longitudinally extending raised projection 12 on the opposite side of the panel. The external sheet 2 has a substantially flat portion 9 between the longitudinally extending raised portions. In one configuration, the flat portion 9 extends completely between the first and second raised projections 11, 12 on the sides of the panel.

Additionally or alternatively, the external sheet 2 has a first longitudinally extending recessed indentation 30 at one side of the panel and a second longitudinally extending recessed indentation 31 on the opposite side of the panel.

The first and second longitudinally extending raised indentations 30, 31 are located adjacent to the first and second longitudinally extending raised projections 11, 12 and between the first and second longitudinally extending raised projections.

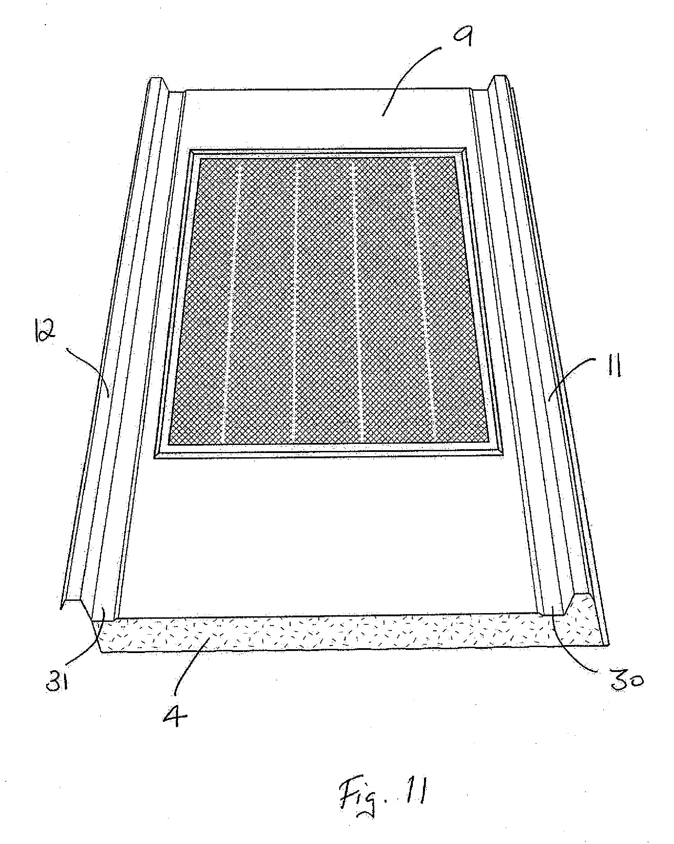

In this configuration, as shown in figure 11, the flat portion extends completely between the first and second longitudinally extending indentations, 30, 31. These longitudinally extending raised indentations 30, 31 provide reinforcing for the composite panel with a rectilinear opening 7. Such a rectilinear opening reduces the structural rigidity and performance of the external sheet and therefore the complete panel. The profiled indentations 30, 31 provide improved stiffness to the panel eliminating any deformation of the external sheet.

The rectilinear opening 7 is provided in the substantially flat portion 9. The substantially flat portion extends either between the raised projections 11, 12 or between the recessed indentations 30, 31.This maximises the area to which photovoltaic material is provided and exposed to sunlight. In this way, the solar energy collecting efficiency of the panel is enhanced.

The raised projections 11, 12 are in the form of crowns. The crowns are of generally trapezoidal form and extend longitudinally along the length of the panel. A side underlap projection or crown 11 is provided on one side of the upper sheet 2 and a side overlap projection or crown 12 on the opposite side of the panel. The raised projection 12 extends beyond the internal sheet 3 and the insulating body 4 to define a side overlap for overlapping with the raised projection 11 of an adjacent panel. In use, adjacent like panels are overlapped by overlapping the overlap crown 12 of one panel with the underlap crown 11 of an adjacent panel.

An endlap portion 13 is additionally or alternatively provided for end lapping of adjacent like panels. On installation of a panel roof, it will be appreciated that the panels normally start from the bottom or eaves of the roof and are installed upwardly towards the roof ridge. Each panel is provided with an endlap 13 on the external sheet 2, which overlaps the previously installed panel. This ensures that rain water runs off the top of each installed panel. The endlap 13 extends substantially across the width of the panel.

In one configuration the opposing end of the panel is arranged with a flush finish such that when the endlap of another panel overlaps it and a flush edge is achieved.

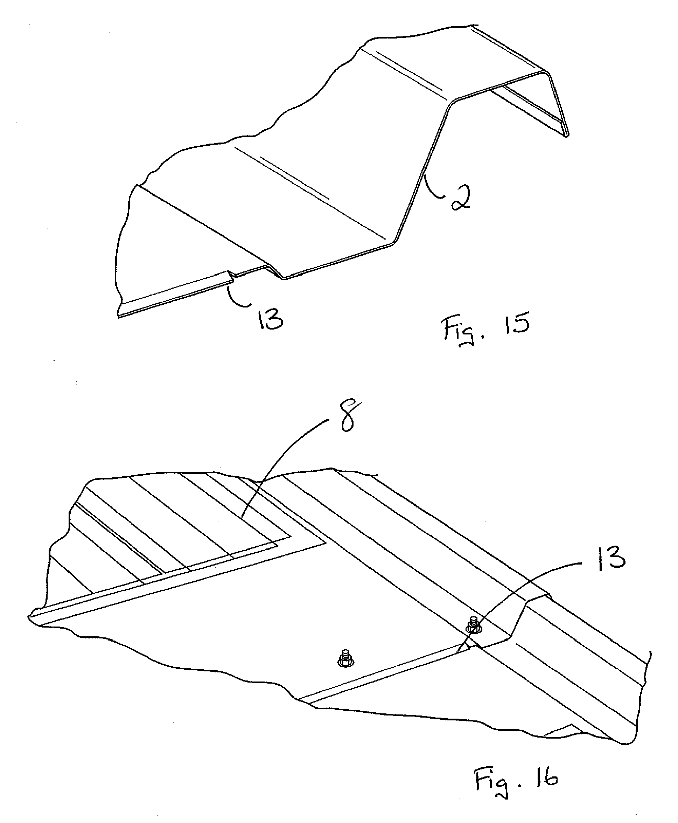

As shown in figure 15, the endlap 13 on the external sheet 2, in an alternative configuration is angularly arranged. In a preferred configuration this angular arrangement forms a fold. The extends across at least a portion of the panel width. The fold, for example, is a 5mm fold at an angle of 30 degrees to the horizontal line of the external sheet of the panel, however it will be appreciated that it is not restricted as such. The use of the angular endlap facilitates mating of the panels and introduces additional strength and rigidity to the panel.

The introduction of a rectilinear opening in the external sheet 2 results in a reduction of structural rigidity of the panel. This is often particularly an issue when the opening is close to or a short distance from the end lap as a deformity of the end may occur. Such a distortion or deformity results may result in an uneven or compromised endlap. For example, the distortion may result in a wavy endportion of the panel inhibiting the weather-tight joint.

The use of an angular endlap where a rectilinear opening is provided, enhances the rigidity of the panel and in particular of the joint with an adjacent panel. The angular endlap facilitates improved mating of the panels without compromising the weather tightness of the joint.

The panel, in one configuration may have engagement formations in the form of recesses 15 and projections 16 for engagement of adjacent like panels. The inter-engagement features 15, 16 are in this case provided by the internal sheet 3 but may be provided by either the external panel sheet and/or the internal panel sheet. Inter-engagement features may be provided on any of the panels of the invention.

As outlined above providing a rectilinear opening in the outer face of the external sheet leads to structural instabilities in the panel. To overcome these structural inefficiencies, a stiffening profile(s) or reinforcing means 18 is provided between the external sheet and the internal sheet. This stiffening profile may be provided in conjunction with the recessed indentations, or one or both of these strengthening means may be provided.

In a preferred configuration the stiffening profile comprises a substantially Z shaped member 32. This configuration provides an optimal solution based on structural performance, material usage efficiency, ease of assembly and cost effectiveness. Alternative configurations comprises a substantially C shaped member 33, a substantially L shaped member 34, a substantially U shaped member 35 or a substantially S shaped member 36.

The reinforcing means or stiffening profiles are mounted on the inner face of the external sheet 2. The stiffening profiles may be bonded using an adhesive bonding. The stiffening profile extends at least partially between the inner face of the external sheet and the inner face of the inner sheet. The stiffening profiles are preferably structurally bonded along the longitudinal length of the inner face of the external sheet.

The reinforcing means are preferably mounted on the inner face of the external sheet on the substantially flat portion or alternatively on the inner face of the longitudinally extending indentations 30,31. A first part of the stiffening profile, which in the case of a Z profile is the flat top portion of the Z is arranged to attach or mount to the external sheet. The second part, which in the case of the Z profile is the bottom flat portion of the Z and the angled portion extending between the top flat portion and the bottom flat portion extends at least partially into the body of insulation 4. A first stiffening profile is mounted on one side of the panel and a second stiffening profile is mounted on the opposite side of the panel. The stiffening profiles extend substantially along the longitudinal length of the panel. One or more stiffening profile sections may be used depending on the longitudinal length of the panel.

In an embodiment, the dimensions of the stiffening profiles are determined based on the structural strength of the composite panel 1 with the rectilinear opening 7 therein.

In determining the dimensions of the stiffening profiles, a set of predetermined parameters are measured. These parameters include one or more of the following steel centroid position, allowable deflection limits, the span of the panel, the load which the panel will withstand, and/or the shear/tensile characteristics of the material from which the stiffening profile is to be formed.

Suitable materials for the manufacture of the stiffening profiles include carbon fibre, galvanised steel or stainless steel. In one configuration the stiffening profiles are manufactured from galvanised steel, optionally 1.2mm gauge galvanised 320N/m2 yield steel. In one configuration, the geometry of the Z stiffener profile is 25mmX25mmX25mm. In one configuration where the insulating body is 80mm thick for example, the Z stiffener profile of the dimensions disclosed above would extend 25mm into the insulating body.

Stiffening profiles of the type described above act to alter the centroid position of the external sheet and thus provides a stronger, more robust panel. These stiffening profiles offer improved stiffness to the panel allowing the panel to span similar to that of a standard composite roof panel.

The composite panel comprises terminals 20, 21 for connecting to an external inverter (not shown). The terminals 20, 21 are in this case provided in a housing 22. The housing extends through a hole 25 in the backing sheet 3 of the composite panel. The housing 22 has an enlarged flange portion 26. The flange portion 26 is engageable with the exposed surface of the internal sheet 3. Alternatively or additionally, the flange 26 may have an adhesive such as a double-sided adhesive body or pad 27 to bond to the outer surface of the internal sheet 3. The housing 22 is optionally also have a vent hole provided with a hydrophobic material.

At least a portion 23, 24 of the terminals 20, 21 extend through the housing 22. Cabling shown in the dotted lines of Figure 6 is connectable to the terminals 20, 21. This cabling is also connectable to a junction box 19 of the solar module 8. This cabling can be inserted during manufacture, thus providing an easy to install system. No external connection to the solar collector is required. Therefore, electrical interconnection is internal and not exposed to weathering. Electrical connection can be done at the same time as building electrical fit out thus saving costs and time. There is no risk of wire fouling during future rood maintenance. No external cable trays are required, again reducing material and labour costs. Further interconnection maintenance is facilitated from the inside of the building, no roof access is required.

In addition, the provision of the connectors and internal cabling as described above ensures a truly integrated solar collector module in a composite insulating panel. The cabling is preferably insulated to protect the cabling from temperature variations during the manufacturing of the composite panel. The cabling may be clipped or otherwise attached to the internal faces of the external or internal sheets to provide stability during the insertion of the insulating foam.

It will be appreciated that the junction box 19 is subject to temperature variations. These temperature variations may be due to exothermic reactions occurring during insertion of the insulation foam. The temperature variations also occur in use. When the solar collector cell is mounted within the rectilinear opening 7, the junction box 19 extends rearward of the internal face of the external sheet 2. It will be appreciated that in use the junction box is within the insulation of the composite panel. Therefore, in use, the terminal box may overheat resulting in catastrophic failure of the junction box.

In a preferred configuration, a protective surround 28 is provided for the junction box. The protective surround 28 is formed to have substantially the same shape as the terminal. For example if the terminal is rectangular, then the surround 28 will be substantially rectangular.

The surround may be formed from preformed polyurethane foam, for example. The depth of the surround 28 is preferably equivalent to the distance between the internal faces of the internal sheet 3 and the internal face of the external sheet 2 when sandwiched together. Typically this depth is in the range of 80mm.

When insulation foam is inserted between the internal sheet and the external sheet as described below, the provisioning of the surround provides an air cavity around the junction or terminal box 19. This air cavity facilitates heat dissipation from the junction box 19 when in use and also serves to protect the junction box 19 from overheating during the insulation insertion process. The air cavity and the internal sheet acts as a heat sink ensuring excess temperatures are not experienced by the junction box and it's electrical components.

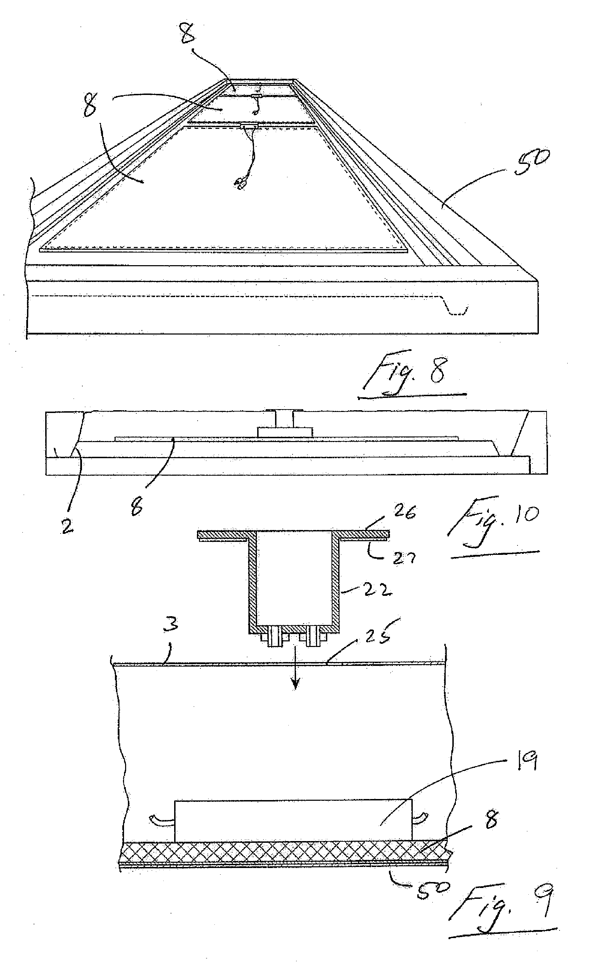

As illustrated in Fig. 8, the external sheet 2 may comprise a plurality of spaced-apart cut-away openings, each having a photovoltaic solar collector module 8 mounted therein. The photovoltaic solar collector modules 8 may be electrically interconnected internally. Cabling may extend from the terminals 20, 21 of one solar collector module 8, to the terminals 20, 21 of the adjacent solar connector module. One or a plurality of junction boxes may be provided and connected as described above.

The panel of the invention has the advantage that a large amount of photovoltaic material is provided. This is important, not only in providing manufacturing efficiencies, but also in ensuring that the maximum practical amount of the face of the panel exposed to sunlight is covered by photovoltaic material. At the same time panel side overlap features are provided for underlapping with like panels for ease of assembly, on site. The provision of the stiffening means ensures a structurally stable panel with the same structural strength as a panel without the rectilinear opening having a solar collector module mounted therein.

In the method of claim 11 for manufacturing a composite insulated panel of the invention, a rectilinear hole 7 is cut out in the external sheet 2 to accommodate a photovoltaic solar collector module 8. The external sheet is placed external face down, for example in a mould 50. Stiffener profiles are bonded or attached to the inner face of the external sheet on the opposite sides of the external sheet.

In one configuration a single stiffener profile extends the longitudinal length of the external sheet, however it will be appreciated that multiple sections of stiffener profiles may alternatively be used. The solar collector module 8 is then inserted into the cut-out hole 7. The solar collector module 8 is sealed to the external sheet using the sealant 10.

In an alternative configuration wherein a gasket 17 is in use, the gasket 17 is inserted between the solar collector module and the external sheet. The gasket is inserted into the aperture 7 initially and the solar module is then inserted. The gasket facilitates snap fitting of the solar module.

The protective surround 28 is positioned around the junction box 19 of the solar collector module. The protective surround may be held in place by adhesive tape or the like. A hole 25 is cut in the inner or backing sheet 3 to receive the connector housing. The connector housing penetrates into the panel depth during assembly. Electrical connections, for example the cabling as described above are lead from the junction box of the solar collector module 8 through the connector housing 22 at the terminals 20, 21.

The backing sheet or inner sheet 3 is applied over and spaced above the external sheet 2. To ensure the internal and external sheets are sufficiently spaced apart and supported, internal sheet supports can be used to support the sheets during production. These supports may be made from a plastics material. In a preferred configuration, these supports are star shape, as such a shape ensures minimum contact with both the internal and external sheets, and ensures maximum contact area on the internal and external sheets for adherence of foam insulation. The supports are also configured to match the height of the finished product. It will be appreciated that these supports do not contribute to the final product function, but are used as an aid during manufacture. Alternatively, preformed pieces of foam insulation of suitable dimensions may also be used as internal sheet supports.

Finally, a body of insulating material is provided between the inner face of the internal sheet 3 and the inner face of the external sheet 2 and the inner face of the photovoltaic solar collector 8. In this case, the body 4 of insulation material is provided by injecting liquid foam reactants between the inner faces of the backing sheet 3 and the inner faces of the external sheet 2 and the solar collector module 8. The liquid foam reactants fill the cavity between the internal faces.

The protective surround 28 prevents foam from surrounding the junction box 19 of the solar collector module and provides an air cavity for heat dissipation. The foam encapsulates the surround encasing it securely. It will be appreciated that this removes the need for additional fixings for the surround, however, additional fixings may be used.

In addition, a cable management system can be introduced. This cable management system ensures that the temperature of the electrical cables within the foam do not make contact with the rear of the PV module. The module may reach very high temperatures during maximum operating conditions and at high temperatures there may be a risk of the cable surround softening and higher resistance being experienced from the cables. The cable management system ensures a predetermined position for the cables. In a preferred configuration, the cables are clipped or attached to the inner face of the second sheet 3. The cable management system is assembled to the inner face of the second sheet prior to foam insertion.

The method of claim 11 alternatively or additionally comprises the steps of profiling the side edges of the external sheet 2 to form the first longitudinally extending raised projection 11 at one side of the panel and the second longitudinally extending raised projection 12 at an opposite side edge of the panel leaving a substantially flat portion 9 extending between the first and second raised projections. The profiling may be performed before or after the rectilinear cutout 7 to accommodate the solar collector module 8 is cut out.

The side edges of the external sheet are additionally or alternatively also profiled to form the first longitudinally extending recessed indentation 30 at one side of the panel and the second longitudinally extending recessed indentation 31 at the opposite side edge of the panel. The profiling may be performed before or after the hole to accommodate the solar collector module is cut out.

On site, a number of the insulating panels are jointed together and the solar collector modules of adjacent panels may be interconnected. This terminals 20, 21 facilitate the interconnection of adjacent panels.

One advantage of the composite panel of the invention is that a photovoltaic material is incorporated as part of the manufacturing process. Thus, no additional work is required on site - the panel is fitted in exactly the same manner as a conventional composite panel.

Integrating the connector into the panel during manufacture ensures that no roof access is required for electrical interconnection on site. This provides a safe working environment and reduces costs considerably as safety barriers such as roof edge protectors are not required.

The internal electrical interconnection are not exposed to weathering. Electrical interconnection can be done at the same time as the building electrical fit out, thus saving costs and time. There is no risk of wire fouling during future roof maintenance. No external cable trays are required, again reducing material and labour costs. Further interconnection maintenance is facilitated from the inside of the building, no roof access is required.

Manufacture, transportation and packaging costs are minimised as the manufactured panel is transported as a single unit because the photovoltaic panel is integrated.

Frames are not required to mount the photovoltaic panel as the unit is robust but light in weight. There is less fixing penetration required on the roof and the total system can be fully guaranteed. The system and manufacturing methods described above provide a one stop solution for cladding and mounting photovoltaic cells.

The photovoltaic roofing panels of the invention may be connected to an electrical system using known technologies.

It will be appreciated that the invention may be applied to a wide range of panels including roof panels, wall panels, and/or floor panels. Maximum solar efficiency is however generally achieved by covering south facing portions of a building with roof panels of the invention.

The panels may be used to construct part of or the entire building envelope including part or all of one or more of the roof, walls and floor. The side overlap and underlap projections may be used to overlap with any panels (having a photovoltaic solar collector function or not) that have side overlap/underlap features of the same profile or equivalent profile as those of the panel of the invention.

Various aspects described with reference to one embodiment may be utilised, as appropriate, with another embodiment within the limits defined by the claims.

Many variations on the embodiments described will be readily apparent. Accordingly the invention is not limited to the embodiments hereinbefore described which may be varied in detail within the limits defined by the claims.

## Claims

1. A composite insulating panel (1) comprising a first sheet (2) having an inner face and an outer face, and a body of insulating material (4), the first sheet (2) having a cut-away opening (7) therein for mounting a photovoltaic solar collector module (8), the first sheet (2) being metallic; **characterised in that** the panel (1) comprises a second sheet (3) having an inner face and an outer face; the body of insulating material (4) being placed between the inner face of the first sheet (2) and the inner face of the second sheet (3), the second sheet (3) being metallic; and **in that** the panel (1) comprises a first reinforcing means (18), attached to the inner face of the first sheet (2) at a first side of the panel and a second reinforcing means (18) attached to the inner face of the first sheet (2) at the opposing side of the panel, and wherein the first and second reinforcing means (18) extend at least partially into the body of insulating material (4).

2. The composite insulating panel (1) according to claim 1 wherein the first or second reinforcing means (18) comprises a first part for attaching to the first sheet (2) and a second part for extending at least partially into the body of insulating material (4).

3. The composite insulating panel (1) according to claim 1 or 2 wherein the first or second reinforcing means comprises a substantially shaped member (36) or a substantially U shaped member (35) or a substantially L shaped member (34) or a substantially T shaped member.

4. The composite insulating panel (1) according to any previous claim further comprising a gasket (17) mounted along the perimeter of the cut-away opening (7).

5. A panel (1) as claimed in any previous claim wherein the first sheet (2) has a first longitudinally extending recessed indentation (30) at one side of the panel (1) and a second longitudinally extending recessed indentation (31) at an opposite side of the panel, (1) wherein the first and second recessed indentations (30,31) are located between first and second longitudinally extending raised projections (11,12).

6. The panel (1) according to Claim 5 wherein the first reinforcing means (18) is attached to the first longitudinally extending recessed indentation (30) and the second reinforcing means (18) is attached to the second longitudinally extending recessed indentation (31).

7. A panel (1) as claimed in any of claims 1 to 6, wherein the first sheet (2) comprises an endlap (15,16) for jointing adjacent panels, and wherein at least a portion of the end overlap (15,16) is arranged at an angle with respect to the first sheet (2).

8. A panel (1) according to any previous claim further comprising a protective surround (28) positioned between the inner face of the first sheet (2) and the inner face of the second sheet (3) and arranged to provide a cavity in the body of insulating material (4) to accommodate a junction box (19) of a solar collector module (8) when mounted in the cut-away opening (7) in the first sheet (2).

9. A panel system comprising a composite insulating panel (1) according to any of Claims 1 to 8 and a photovoltaic solar collector module (8) mounted in the cut-away opening (7) therein having an inner face and an outer face and wherein the body of insulating material (4) extends between inner face of the second sheet, (3) the inner face of the first sheet (2) and the inner face of the photovoltaic solar collector module (8).

10. A roof assembly comprising a plurality of panel systems as claimed in claim 9.

11. A method for manufacturing a panel system, comprising the steps of: -
providing a first metallic sheet;
(2) cutting an opening (7) in the first sheet (2) to accommodate a photovoltaic solar collector module;
(8) attaching a first reinforcing means (18) to an inner face of the first sheet (2) at a first side of the panel and a second reinforcing means (18) attached to the inner face of the first sheet (2) at the opposing side of the panel; inserting the solar collector module (8) into the cut-away opening;
(7) sealing the solar collector module (8) to the first sheet;
(2) providing a second metallic sheet, (3) the second sheet (3) having an opening (25) therein to receive a connector housing;
(22) leading electrical connections from the solar collector module (8) through the connector housing; (22) and
providing a body of insulating material (4) between an inner face of the second sheet (3) and the inner face of the first sheet (2) and an inner face of the solar collector module (8) and wherein the first and second reinforcing means (18) extend at least partially into the body of insulating material (4).

12. A method as claimed in claim 11 further comprising the steps of profiling the first sheet (2) to form a first longitudinally extending recessed indentation (30) at one side of the panel and a second longitudinally extending recessed indentation (31) at an opposite side of the panel.

13. The method according to Claim 12 wherein the first reinforcing means (18) is attached to the first longitudinally extending recessed indentation and the second reinforcing means (18) is attached to the second longitudinally extending recessed indentation (31).

14. The method according to any of claims 11 to 13 further comprising positioning a protective surround (28) between the inner face of the first sheet (2) and the inner face of the second sheet (3) to provide a cavity in the body of insulating material (4) for accommodating a junction box (19) of the solar collector (8).

15. The method according to any of claims 11 to 14 further comprising positioning a plurality of separators between the inner face of the first sheet (2) and the inner face of the second sheet (3) prior to providing the body of insulating material (4).

16. The method according to any of claims 11 to 15 wherein leading electrical connections from the solar collector module (8) through the connector housing (22) comprises attaching the electrical connections to the inner face of the second sheet (3).

## Patentansprüche

1. Eine Verbundisolierplatte (1), wobei die Verbundisolierplatte eine erste Schicht (2) mit einer inneren Seite und einer äußeren Seite und einem Körper aus isolierendem Material (4) aufweist, wobei die erste Schicht (2) eine Schnittöffnung (7) darin aufweist, zum Anbringen eines Photovoltaik Solarkollektor Moduls (8), wobei die erste Schicht (2) metallisch ist; **dadurch gekennzeichnet, dass** die Platte (1) eine zweite Schicht (3) mit einer inneren Fläche und einer äußeren Fläche aufweist; wobei der Körper aus isolierendem Material (4) zwischen die innere Fläche der ersten Schicht (2) und die innere Fläche der zweiten Schicht (3) eingebracht ist, wobei die zweite Schicht (3) metallisch ist; und in dem die Platte (1) ein erstes Verstärkungsmittel (18) aufweist, das an die innere Fläche der ersten Schicht (2) an einer ersten Seite der Platte angebracht ist und ein zweites Verstärkungsmittel (18), das an die innere Fläche der ersten Schicht (2) an der gegenüberliegenden Seite der Platte angebracht ist, und wobei sich das erste und das zweite Verstärkungsmittel (18) wenigstens teilweise in den Körper aus isolierendem Material (4) erstreckt.

2. Die Verbundisolierplatte (1) nach Anspruch 1, wobei das erste oder das zweite Verstärkungsmittel (18) einen ersten Teil zum Anbringen an die erste Schicht (2) aufweist und einen zweiten Teil, der sich wenigstens teilweise in den Körper aus isolierendem Material (4) erstreckt.

3. Die Verbundisolierplatte (1) nach Anspruch 1 oder 2, wobei das erste oder das zweite Verstärkungsmittel (18) ein im Wesentlichen Z-förmiges Element (36) oder ein im Wesentlichen U-förmiges Element (35) oder ein im Wesentlichen L-förmiges Element (34) oder ein im Wesentlichen T-förmiges Element aufweist.

4. Die Verbundisolierplatte (1) nach einem der vorhergehenden Ansprüche, wobei die Verbundisolierplatte ferner eine Dichtung (17) aufweist, die entlang des Umfangs der Schnittöffnung angebracht ist.

5. Eine Platte (1) nach einem der vorhergehenden Ansprüche, wobei die erste Schicht (2) eine erste sich in Längsrichtung erstreckende ausgesparte Vertiefung (30) auf einer Seite der Platte (1) aufweist und eine zweite sich in Längsrichtung erstreckende ausgesparte Vertiefung (31) auf einer gegenüberliegenden Seite der Platte (1), wobei die erste und die zweite ausgesparte Vertiefung (30, 31) zwischen einem ersten und einem zweiten sich in Längsrichtung erstreckende Vorsprünge (11, 12) angeordnet sind.

6. Die Platte (1) nach Anspruch 5, wobei das erste Verstärkungsmittel (18) an die erste sich in Längsrichtung erstreckende ausgesparte Vertiefung (30) angebracht ist, und wobei das zweite Verstärkungsmittel (18) an die zweite sich in Längsrichtung erstreckende ausgesparte Vertiefung (31) angebracht ist

7. Eine Platte (1) nach einem der Ansprüche 1 bis 6, wobei die erste Schicht (2) eine Überlappung (15, 16) aufweist zum Verbinden von benachbarten Platten, und wobei wenigstens ein Teil der End-Überlappung (15, 16) unter einem Winkel bezüglich der ersten Schicht angeordnet ist.

8. Die Platte nach einem der vorhergehenden Ansprüche, wobei die Platte ferner eine Schutzumrandung (28) aufweist, die zwischen der inneren Fläche der ersten Schicht (2) und der inneren Fläche der zweiten Schicht (3) positioniert ist und so angeordnet ist, um eine Kavität in dem Körper aus isolierendem Material (4) bereitzustellen, um eine Anschlussdose (19) eines Solarkollektor Moduls (8) unterzubringen, wenn dieses in der Schnittöffnung (7) in der ersten Schicht (2) montiert wird.

9. Ein Plattensystem, wobei das Plattensystem eine Verbundisolierplatte (1) nach einem der Ansprüche 1 bis 8 aufweist und ein Photovoltaik Solarkollektor Modul (8), das in der Schnittöffnung (7) montiert ist, mit einer inneren Fläche und einer äußeren Fläche und wobei sich der Körper aus isolierendem Material (4) zwischen der inneren Fläche der zweiten Schicht (3), der inneren Fläche der ersten Schicht (2) und der inneren Fläche des Photovoltaik Solarkollektor Moduls (8) erstreckt.

10. Eine Dachanordnung, wobei die Dachanordnung eine Vielzahl von Plattensystemen nach Anspruch 9 aufweist.

11. Ein Verfahren zum Herstellen eines Plattensystems, wobei das Verfahren die folgenden Schritte aufweist:
Bereitstellen einer ersten metallischen Schicht (2);
Ausschneiden einer Öffnung (7) aus der ersten Schicht (2), um ein Photovoltaik Solarkollektor Modul (8) aufzunehmen;
Anbringen eines ersten Verstärkungsmittels (18) an einer inneren Fläche der ersten Schicht (2) an einer ersten Seite der Platte und eines zweiten Verstärkungsmittels (18) an die innere Fläche der ersten Schicht (2) an der gegenüberliegenden Seite der Platte;
Einsetzen des Solarkollektor Moduls (8) in die Schnittöffnung (7);
Abdichten des Solarkollektor Moduls (8) an der ersten Schicht (2);
Bereitstellen einer zweiten metallischen Schicht (3), wobei die zweite Schicht (3) eine Öffnung (25) darin aufweist, um ein Anschlussgehäuse (22) aufzunehmen, das elektrische Leitungen von dem Solarkollektor Modul (8) durch das Anschlussgehäuse (22) führt; und
Bereitstellen eines Körpers aus isolierendem Material (4) zwischen einer inneren Fläche der zweiten Schicht (3) und der inneren Fläche der ersten Schicht (2) und einer inneren Fläche des Solarkollektor Moduls (8) und wobei sich das erste und das zweite Verstärkungsmittel (18) wenigstens teilweise in den Körper aus isolierendem Material (4) erstrecken.

12. Das Verfahren nach Anspruch 11, wobei das Verfahren ferner die folgenden Schritte des Profilierens der ersten Schicht (2) aufweist, um eine erste sich in Längsrichtung erstreckende ausgesparte Vertiefung (30) an einer Seite der Platte auszubilden, und um eine zweite sich in Längsrichtung erstreckende ausgesparte Vertiefung (31) an einer gegenüberliegenden Seite der Platte auszubilden.

13. Das Verfahren nach Anspruch 12, wobei das erste Verstärkungsmittel (18) an die erste sich in Längsrichtung erstreckende ausgesparte Vertiefung angebracht ist und wobei das zweite Verstärkungsmittel (18) an die zweite sich in Längsrichtung erstreckende ausgesparte Vertiefung (31) angebracht ist.

14. Das Verfahren nach einem der Ansprüche 11 bis 13, wobei das Verfahren ferner das Positionieren einer Schutzumrandung (28) zwischen die innere Fläche der ersten Schicht (2) und die innere Fläche der zweiten Schicht (3) aufweist, um eine Kavität in dem Körper aus isolierendem Material (4) bereitzustellen, zum Aufnehmen einer Anschlussdose (19) des Solarkollektors (8).

15. Das Verfahren nach einem der Ansprüche 11 bis 14, wobei das Verfahren ferner das Positionieren einer Vielzahl von Trennstücken aufweist, zwischen der inneren Fläche der ersten Schicht (2) und der inneren Fläche der zweiten Schicht (3), vor dem Bereitstellen des Körpers aus isolierendem Material (4).

16. Das Verfahren nach einem der Ansprüche 11 bis 15, wobei das Führen von elektrischen Leitungen von dem Solarkollektor Modul (8) durch das Anschlussgehäuse (22), das Anbringen der elektrischen Leitungen an die innere Fläche der zweiten Schicht (3) aufweist.

## Revendications

1. Panneau isolant composite (1) comprenant une première feuille (2) ayant une face intérieure et une face extérieure, et un corps en matériau isolant (4), la première feuille (2) comportant une ouverture découpée (7) dedans pour monter un module capteur solaire photovoltaïque (8), la première feuille (2) étant métallique ; **caractérisé en ce que** le panneau (1) comprend une deuxième feuille (3) ayant une face intérieure et une face extérieure ; le corps en matériau isolant (4) étant placé entre la face intérieure de la première feuille (2) et la face intérieure de la deuxième feuille (3), la deuxième feuille (3) étant métallique ; et **en ce que** le panneau (1) comprend des premiers moyens de renfort (18), fixés à la face intérieure de la première feuille (2) au niveau d'un premier côté du panneau, et des deuxièmes moyens de renfort (18) fixés à la face intérieure de la première feuille (2) au niveau du côté opposé du panneau, et les premiers et les deuxièmes moyens de renfort (18) s'étendant au moins partiellement dans le corps en matériau isolant (4).

2. Panneau isolant composite (1) selon la revendication 1, dans lequel les premiers ou les deuxièmes moyens de renfort (18) comprennent une première partie destinée à être fixée à la première feuille (2) et une deuxième partie destinée à s'étendre au moins partiellement dans le corps en matériau isolant (4).

3. Panneau isolant composite (1) selon la revendication 1 ou 2, dans lequel les premiers ou les deuxièmes moyens de renfort comprennent un élément sensiblement en forme de Z (36) ou un élément sensiblement en forme de U (35) ou un élément sensiblement en forme de L (34) ou un élément sensiblement en forme de T.

4. Panneau isolant composite (1) selon l'une quelconque des revendications précédentes, comprenant en outre un joint d'étanchéité (17) monté le long du pourtour de l'ouverture découpée (7).

5. Panneau (1) selon l'une quelconque des revendications précédentes, dans lequel la première feuille (2) comporte une première empreinte en retrait s'étendant longitudinalement (30) au niveau d'un côté du panneau (1) et une deuxième empreinte en retrait s'étendant longitudinalement (31) au niveau du côté opposé du panneau (1), les première et deuxième empreintes en retrait (30, 31) étant situées entre des première et deuxième parties en saillie surélevées s'étendant longitudinalement (11, 12).

6. Panneau (1) selon la revendication 5, dans lequel les premiers moyens de renfort (18) sont fixés à la première empreinte en retrait s'étendant longitudinalement (30) et les deuxièmes moyens de renfort (18) sont fixés à la deuxième empreinte en retrait s'étendant longitudinalement (31).

7. Panneau (1) selon l'une quelconque des revendications 1 à 6, dans lequel la première feuille (2) comprend un recouvrement d'extrémité (15, 16) pour joindre des panneaux adjacents, et dans lequel au moins une portion du recouvrement d'extrémité (15, 16) est agencé avec un certain angle par rapport à la première feuille (2).

8. Panneau (1) selon l'une quelconque des revendications précédentes comprenant en outre un entourage protecteur (28) disposé entre la face intérieure de la première feuille (2) et la face intérieure de la deuxième feuille (3) et agencé pour fournir une cavité dans le corps en matériau isolant (4) pour loger une boîte de raccordement (19) d'un module capteur solaire (8) lorsqu'il est monté dans l'ouverture découpée (7) dans la première feuille (2).

9. Système de panneau comprenant un panneau isolant composite selon l'une quelconque des revendications 1 à 8 et un module capteur solaire photovoltaïque (8) monté dans l'ouverture découpée (7) ayant une face intérieure et une face extérieure et dans lequel le corps en matériau isolant (4) s'étend entre la face intérieure de la deuxième feuille (3), la face intérieure de la première feuille (2) et la face intérieure du module capteur solaire photovoltaïque (8).

10. Ensemble formant toiture comprenant une pluralité de systèmes de panneau selon la revendication 9.

11. Procédé de fabrication d'un système de panneau, comprenant les étapes suivantes :
prévoir une première feuille métallique (2) ;
découper une ouverture (7) dans la première feuille (2) pour loger un module capteur solaire photovoltaïque (8) ;
fixer des premiers moyens de renfort (18) à une face intérieure de la première feuille (2) au niveau d'un premier côté du panneau et des deuxièmes moyens de renfort (18) fixés à la face intérieure de la première feuille (2) au niveau du côté opposé du panneau ;
insérer le module capteur solaire (8) dans l'ouverture découpée (7) ;
sceller le module capteur solaire (8) sur la première feuille (2) ;
prévoir une deuxième feuille métallique (3), la deuxième feuille (3) comportant une ouverture (25) pour recevoir un boîtier de connecteur (22) ;
conduire des connexions électriques provenant du module capteur solaire (8) à travers le boitier de connecteur (22) ; et
prévoir un corps en matériau isolant (4) entre une face intérieure de la deuxième feuille (3) et la face intérieure de la première feuille (2) et une face intérieure du module capteur solaire (8), et les premiers et deuxièmes moyens de renfort (18) s'étendant au moins partiellement dans le corps en matériau isolant (4).

12. Procédé selon la revendication 11, comprenant en outre les étapes consistant à profiler la première feuille (2) pour former une première empreinte en retrait s'étendant longitudinalement (30) au niveau d'un côté du panneau et une deuxième empreinte en retrait s'étendant longitudinalement (31) au niveau du côté opposé du panneau.

13. Procédé selon la revendication 12, dans lequel les premiers moyens de renfort (18) sont fixés à la première empreinte en retrait s'étendant longitudinalement et les deuxièmes moyens de renfort (18) sont fixés à la deuxième empreinte en retrait s'étendant longitudinalement (31).

14. Procédé selon l'une quelconque des revendications 11 à 13, comprenant en outre la mise en place d'un entourage protecteur (28) entre la face intérieure de la première feuille (2) et la face intérieure de la deuxième feuille (3) pour assurer une cavité dans le corps en matériau isolant (4) pour loger une boîte de raccordement (19) du capteur solaire (8).

15. Procédé selon l'une quelconque des revendications 11 à 14, comprenant en outre la mise en place d'une pluralité de séparateurs entre la face intérieure de la première feuille (2) et la face intérieure de la deuxième feuille (3) avant de fournir le corps en matériau isolant (4).

16. Procédé selon l'une quelconque des revendications 11 à 15, dans lequel le fait de conduire des connexions électriques provenant du module capteur solaire (8) à travers le boîtier de connecteur (22) comprend le fait de fixer les connexions électriques à la face intérieure de la deuxième feuille (3).
